# EUROPEAN PATENT APPLICATION

(11) **EP 4 629 420 A1**
(43) Date of publication of application: **08.10.2025**
(21) Application number: 23897334.1
(22) Date of filing: 26.10.2023
(51) Int. Cl.: H01M 50/242, H01M 50/204, H01M 50/209, H01M 50/249, H01M 50/271, H01M 50/505

(54) **BATTERY PACK AND ELECTRIC VEHICLE**

(30) Priority: 01.12.2022 JP 2022193147
(71) Applicant: Yamaha Hatsudoki Kabushiki Kaisha, Iwata-shi, Shizuoka 438-8501 (JP)
(72) Inventor: ENAMI, Noriyuki, Iwata-shi, Shizuoka 438-8501 (JP); ITO, Daiki, Iwata-shi, Shizuoka 438-8501 (JP)
(74) Representative: Grünecker Patent- und Rechtsanwälte PartG mbB
(86) International application number: PCT/JP2023/038788
(87) International publication number: WO 2024/116678

(57) **Abstract**

An electric two-wheeled vehicle 10 includes a battery pack 40 supported by a body frame 12. The battery pack 40 includes a first case 66. The first case 66 includes a first case main body 76 having a wall portion 82 which has an H-shaped section constituted by a cylindrical portion 84 having two open ends and a partitioning portion 90 dividing an inside of the cylindrical portion 84 into a first storage portion 86 and a second storage portion 88; a first flange portion 78 formed at an outer circumference of a first end of the first case main body 76; and a second flange portion 80 formed at an outer circumference of a second end of the first case main body 76. A first plate member 72 is fixed to the first flange portion 78 to close the first storage portion 86. A second plate member 74 is fixed to the second flange portion 80 to close the second storage portion 88. First assembled batteries 126 are housed in the first storage portion 86 and second assembled batteries 128 are housed in the second storage portion 88.

## Description

### TECHNICAL FIELD

The present invention relates to battery packs and electric vehicles, and more specifically to a battery pack in which a plurality of assembled batteries are stacked in tiers, and to an electric vehicle using the same, including, for example, an electric two-wheeled vehicle.

### BACKGROUND ART

As an example which is pertinent to conventional techniques of this kind, Patent Literature 1 discloses an electric energy storage device for an automobile. The electric energy storage device includes a housing, and a storage module housed in the housing. The housing includes a supporting element, a housing upper portion, and a housing lower portion. The supporting element includes an annular supporting frame made of a fiber-reinforced plastic, and a supporting plate made of a metal. The annular supporting frame sandwiches the supporting plate from above and below, thereby adhesively bonded to the supporting plate, and by using the annular supporting frame, it is possible to connect the electric energy storage device with a main body structure of the automobile. The annular supporting frame is formed to absorb all forces and moments acting on the electric energy storage device, while all other members constituting the housing than the annular supporting frame are formed as non-load bearing cover-type parts which do not absorb any forces or moments. Also, sealing elements are positioned respectively between the housing upper portion and the annular supporting frame, and between the housing lower portion and the annular supporting frame.

### CITATION LIST

### PATENT LITERATURE

Patent Literature 1: Japanese Patent No. 5571713

### SUMMARY OF INVENTION

### TECHNICAL PROBLEM

In the electric energy storage device disclosed in Patent Literature 1, the annular supporting frame is made of a fiber-reinforced plastic, and further, the annular supporting frame is connected with the supporting plate by simply sandwiching the supporting plate from above and below so that it would be possible to absorb all the forces and moments which act on the electric energy storage device by means of the annular supporting frame. However, there is no disclosure on increasing stiffness of the supporting element including the annular supporting frame and the supporting plate. Also, the annular supporting frame and the supporting plate are separate members made of different materials from each other. Further, the invention requires a separate sealing element in order to ensure water tightness, i.e., the invention requires an increased number of parts.

Therefore, a primary object of the present invention is to provide a battery pack capable of ensuring water tightness and high stiffness while reducing increase in the number of parts, and to provide an electric vehicle including the same.

### SOLUTION TO PROBLEM

According to an aspect of the present invention, there is provided a battery pack comprising a first case including a first case main body having a wall portion which has an H-shaped section constituted by a cylindrical portion having two open ends and a partitioning portion dividing an inside of the cylindrical portion in an axial direction into a first storage portion and a second storage portion, a first flange portion formed at an outer circumference of a first end of the first case main body, and a second flange portion formed at an outer circumference of a second end, which is an axially opposite end facing away from the first end, of the first case main body; a first plate member fixed to the first flange portion to close the first storage portion; a second plate member fixed to the second flange portion to close the second storage portion; a first assembled battery housed in the first storage portion; and a second assembled battery housed in the second storage portion.

In the present invention, it is possible to increase stiffness of the first case while reducing increase in the number of parts since the first case main body has the integrally formed wall portion having an H-shaped section. Also, it is possible to easily fix the first plate member to the first flange portion which is formed on the outer circumference of the first end of the first case main body, and it is possible to ensure water tightness of the first storage portion by closing the first storage portion. Likewise, it is possible to easily fix the second plate member to the second flange portion which is formed on the outer circumference of the second end of the first case main body, and it is possible to ensure water tightness of the second storage portion by closing the second storage portion.

Preferably, the battery pack further includes a first fin provided on an outer circumferential surface of the first case main body. In this case, by providing the first fin on the outer circumferential surface of the first case main body, it becomes possible to increase a heat dissipation area and improve cooling performance. Also, it becomes possible to obtain the first case which is light-weighted and high in stiffness.

Further preferably, the battery pack further includes a second fin provided on a main surface of the partitioning portion. In this case, by providing the second fin on the main surface of the partitioning portion, it becomes possible to increase a heat dissipation area and improve cooling performance. Also, it becomes possible to obtain the first case which is light-weighted and high in stiffness.

Further, preferably, the battery pack further includes a third fin provided on a main surface of the first plate member. In this case, by providing the third fin on the main surface of the first plate member, it becomes possible to increase a heat dissipation area and improve cooling performance. Also, it becomes possible to obtain the first plate member which is light-weighted and high in stiffness.

Preferably, the battery pack further includes a fourth fin provided on a main surface of the second plate member. In this case, by providing the fourth fin on the main surface of the second plate member, it becomes possible to increase a heat dissipation area and improve cooling performance. Also, it becomes possible to obtain the second plate member which is light-weighted and high in stiffness.

Further preferably, the battery pack further includes a first bus bar connecting the first assembled battery and the second assembled battery with each other. With this arrangement, the partitioning portion includes a first through-hole as a passage for the first bus bar. In this case, with the first bus bar which is routed through the first through-hole of the partitioning portion, it is possible to easily connect the first assembled battery housed in the first storage portion with the second assembled battery housed in the second storage portion.

Further, preferably, the battery pack further includes a second case including a second case main body having an open end, and a third flange portion formed on an outer circumference of an end of the second case main body. With this arrangement, the first flange portion and the third flange portion are fastened integrally to each other, with the first plate member sandwiched in between. In this case, by fastening the first flange portion and the third flange portion integrally to each other with the first plate member sandwiched in between, it becomes possible to connect the first case and the second case with each other by means of flange jointing, making it possible to easily ensure water tightness of the first storage portion of the first case and the second case. By housing the assembled batteries not only inside the first case but also inside the second case, it becomes possible to house a large number of batteries inside the battery pack. By housing electric components inside the second case, it becomes possible to compactify a construction around the battery pack. For example, in a case where the battery pack is placed vertically in an electric two-wheeled vehicle, with the first case located at a higher position and the second case located at a lower position, the outward-bulging first and third flange portions are located at a higher position than the bottom portion of the battery pack. In other words, it is possible to dispose the first flange portion and the third flange portion as closely to the center as possible in the up-down direction. Therefore, it becomes easy to ensure a bank angle of the electric two-wheeled vehicle. It also becomes possible to allow for knee gripping without sacrificing riding postures.

Preferably, the battery pack further includes a third assembled battery housed in the second case main body and a second bus bar connecting the first assembled battery and the third assembled battery with each other. With this arrangement, the first plate member includes a second through-hole as a passage for the second bus bar. In this case, with the second bus bar which is routed through the second through-hole of the first plate member, it is possible to easily connect the first assembled battery housed in the first storage portion of the first case with the third assembled battery housed in the second case.

Further preferably, the battery pack further includes a fifth fin provided on a main surface of the second case main body. In this case, by providing the fifth fin on the main surface of the second case main body, it becomes possible to increase a heat dissipation area and improve cooling performance. Also, it becomes possible to obtain the second case which is light-weighted and high in stiffness.

Further, preferably, the battery pack further includes a third case including a third case main body having an open end, and a fourth flange portion formed on an outer circumference of an end of the third case main body. With this arrangement, the second flange portion and the fourth flange portion are fastened integrally to each other, with the second plate member sandwiched in between. In this case, by fastening the second flange portion and the fourth flange portion integrally to each other with the second plate member sandwiched in between, it becomes possible to connect the first case and the third case with each other by means of flange jointing, making it possible to easily ensure water tightness of the second storage portion of the first case and the third case. By housing the assembled batteries not only inside the first case but also inside the third case, it becomes possible to house a large number of batteries inside the battery pack. By housing electric components inside the third case, it becomes possible to compactify a construction around the battery pack. For example, in a case where the battery pack is placed vertically in an electric two-wheeled vehicle, with the third case located at a higher position and the first case located at a lower position, the outward-bulging second and fourth flange portions are located at a lower position than the top portion of the battery pack. In other words, it is possible to dispose the second flange portion and the fourth flange portion as closely to the center as possible in the up-down direction. Therefore, it is possible to house the battery pack easily inside the body frame, and therefore also inside a cowling, of the electric two-wheeled vehicle. Further, in a case where the battery pack, in which the first case is sandwiched by the second case and the third case, is vertically placed in an electric two-wheeled vehicle, with the third case, the first case and the second case positioned in this order from top toward bottom, the first flange portion and the third flange portion are located at a higher position than the bottom portion of the battery pack, and the second flange portion and the fourth flange portion are located at a lower position than the top portion of the battery pack. In this case, it is possible to concentrate the flange portions to an intermediate region in the vertical direction of the battery pack, so that the battery pack has a generally egg-shaped section, making it possible to form into a shape easy to layout in a two-wheeled vehicle which is voluminous in its center.

Preferably, the battery pack further includes a fourth assembled battery housed in the third case main body, and a third bus bar connecting the second assembled battery and the fourth assembled battery with each other. With this arrangement, the second plate member includes a third through-hole as a passage for the third bus bar. In this case, with the third bus bar which is routed through the third through-hole of the second plate member, it is possible to easily connect the second assembled battery housed in the second storage portion of the first case, with the fourth assembled battery housed in the third case.

Further preferably, the battery pack further includes an electric component provided at least at one of a higher and a lower positions than the first case. In this case, it becomes possible to dispose the electric component inside or near the battery pack, and to make the electric wires inside or around the battery pack short.

Further, preferably, the battery pack further includes an electric wire connected with the electric component. With this arrangement, the partitioning portion includes a fourth through-hole as a passage for the electric wire. In this case, by having the electric wire which leads to the electric component be routed through the fourth through-hole of the partitioning portion, it becomes easy to lay the wire.

Preferably, the battery pack further includes an electric wire connected with the electric component. With this arrangement, the first plate member includes a fifth through-hole as a passage for the electric wire. In this case, by having the electric wire which leads to the electric component be routed through the fifth through-hole of the first plate member, it becomes easy to lay the wire.

Further preferably, the battery pack further includes an electric wire connected with the electric component. With this arrangement, the second plate member includes a sixth through-hole as a passage for the electric wire. In this case, by having the electric wire which leads to the electric component be routed through the sixth through-hole of the second plate member, it becomes easy to lay the wire.

There is provided an electric vehicle including the above-described battery pack and a body frame supporting the battery pack.

The battery pack described above is suitably applicable to an electric vehicle. In particular, since it is possible to increase stiffness of the first case of the battery pack, it is possible to make the first case itself as part of the body frame of the electric vehicle.

### ADVANTAGEOUS EFFECTS OF INVENTION

According to the present invention, there is obtained a battery pack capable of ensuring water tightness and high stiffness while reducing increase in the number of parts, and an electric vehicle including the same.

### BRIEF DESCRIPTION OF DRAWINGS

Fig. 1 is a side view which shows an electric two-wheeled vehicle according to an embodiment of the present invention.
Fig. 2 is a side view which shows an internal structure of the electric two-wheeled vehicle in Fig. 1.
Fig. 3 is a sectional view taken in a line A-A in Fig. 1.
Fig. 4 is a perspective view which shows a battery pack according to an embodiment of the present invention.
Fig. 5 is a side view which shows the battery pack in Fig. 4.
Fig. 6 is a front view which shows the battery pack in Fig. 4.
Fig. 7 is a rear view which shows the battery pack in Fig. 4.
Fig. 8 is a perspective view which shows a first case.
Fig. 9 is a plan view which shows the first case.
Fig. 10 is a bottom view which shows the first case.
Fig. 11 is a perspective view which shows a first plate member (a second plate member).
Fig. 12 is a plan view which shows the first plate member (the second plate member).
Fig. 13 is a bottom view which shows the first plate member (the second plate member).
Fig. 14 is a sectional view taken in a line B-B in Fig. 5.
Fig. 15 is a sectional view taken in a line C-C in Fig. 5.
Fig. 16 is a front perspective view which shows an internal structure of the battery pack.
Fig. 17 is a rear perspective view which shows the internal structure of the battery pack.

### DESCRIPTION OF EMBODIMENTS

Hereinafter, embodiments of the present invention will be described with reference to the drawings.

The terms left and right, front and rear, and up and down used in the embodiments of the present invention refer to left and right, front and rear, and up and down based on the state where a rider of an electric two-wheeled vehicle 10 is seated in a seat 62, facing a handlebar 22. In the drawings, "Fr" indicates forward, "Rr" indicates rearward, "R" indicates rightward, "L" indicates leftward, "U" indicates upward and "Lo" indicates downward.

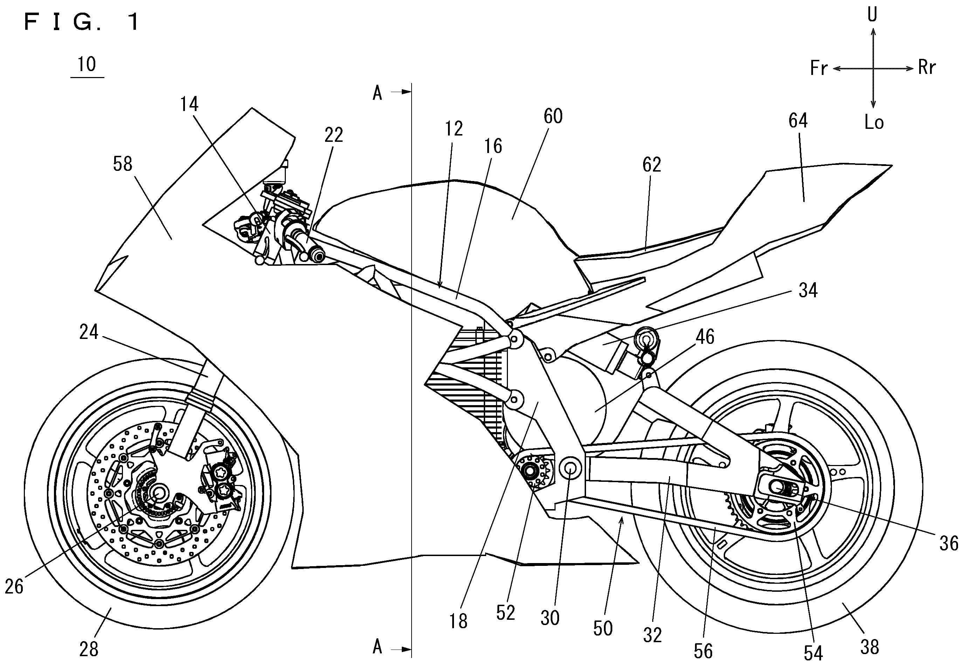

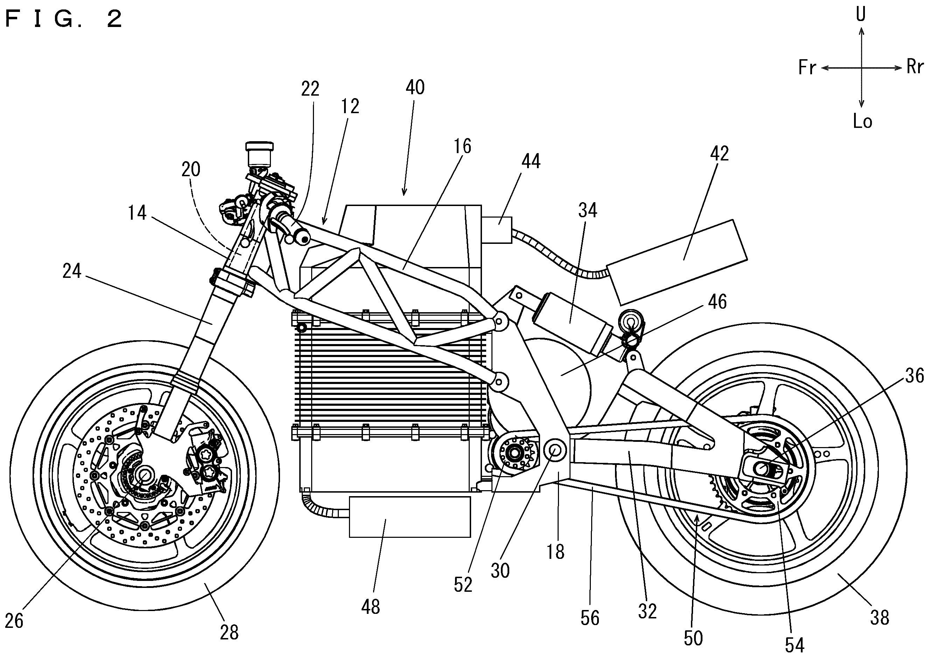

Referring to Fig. 1 and Fig. 2, the electric two-wheeled vehicle 10 according to an embodiment of the present invention includes a body frame 12. The body frame 12 includes a head pipe 14, a front frame 16 extending obliquely rearward and downward from the head pipe 14, and a rear frame 18 connected with a rear portion of the front frame 16 and extending obliquely rearward and downward.

A steering shaft 20 is inserted into the head pipe 14 pivotably therein. The steering shaft 20 has an upper end portion, to which a handlebar 22 is attached. The steering shaft 20 has a lower end portion, to which a front fork 24 is attached. The front fork 24 has a lower end portion, to which a front wheel 28 is attached rotatably via an axle 26.

The rear frame 18 has a lower portion, to which a front end portion of a swing arm 32 is installed via a pivot axis 30, i.e., the swing arm 32 is provided pivotably. A suspension 34 is provided in a manner to joint a connecting point between the front frame 16 and the rear frame 18 to the swing arm 32. The swing arm 32 has a rear end portion, at which a rear wheel 38 is supported rotatably via an axle 36.

A battery pack 40 is disposed at a position overlapping the front frame 16 in a side view. The front frame 16 is generally U-shaped in a plan view, and the battery pack 40 is disposed between two side-portions of the front frame 16. In a side view, a rear end of the battery pack 40 is located at a more forward position than the swing arm 32, and an upper end of the battery pack 40 is located at a higher position than ends of the handlebar 22 in terms of the vehicle's width. The battery pack 40 is supported by the body frame 12. Behind the battery pack 40, there is disposed an electric charger 42 for charging the battery pack 40. The electric charger 42 is connected with the battery pack 40 via a connector 44. Behind the battery pack 40, at a position overlapping the rear frame 18 in a side view, an electric motor 46 is disposed. Below the battery pack 40, there is disposed an inverter 48 which converts DC power from the battery pack 40 into AC power to supply to the electric motor 46. A driving force from the electric motor 46 is transmitted to the axle 36 via a power transfer mechanism 50, to drive the rear wheel 38 to rotate. The power transfer mechanism 50 includes a sprocket 52 closer to the electric motor 46, a sprocket 54 closer to the rear wheel 38, and a chain 56 connecting the sprockets 52, 54 with each other.

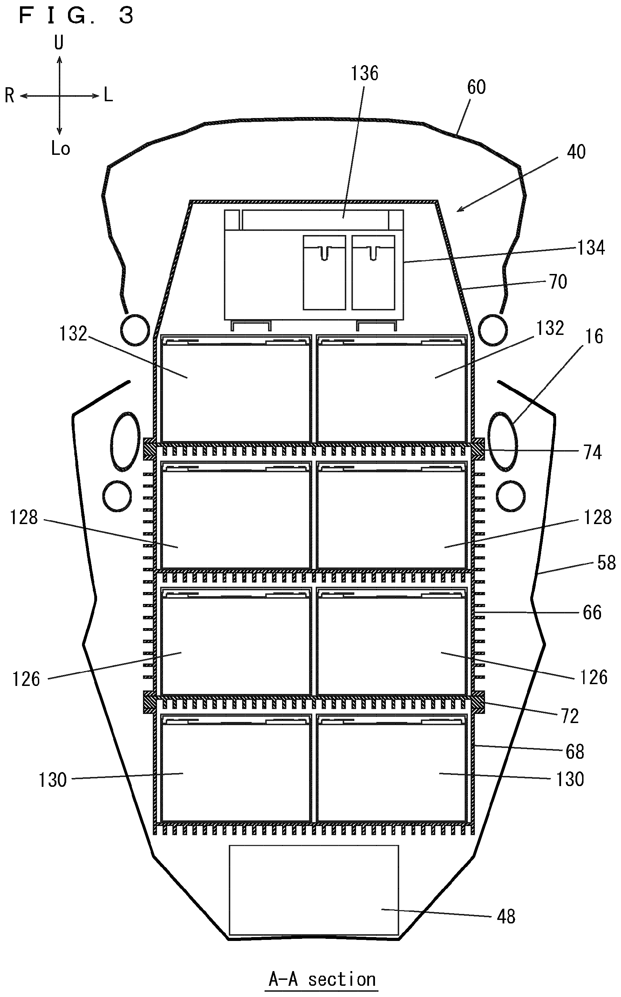

Referring further to Fig. 3, a front cowl 58 is provided to cover the head pipe 14, the front frame 16 and front and side portions of the battery pack 40. A battery cover 60 is provided to cover above the battery pack 40. A seat 62 is provided above the electric charger 42. A tale cowl 64 is provided behind the seat 62. Therefore, when traveling on the electric two-wheeled vehicle 10, the rider takes a riding posture like hugging the battery pack 40.

Hereinafter, the battery pack 40 will be described in detail.

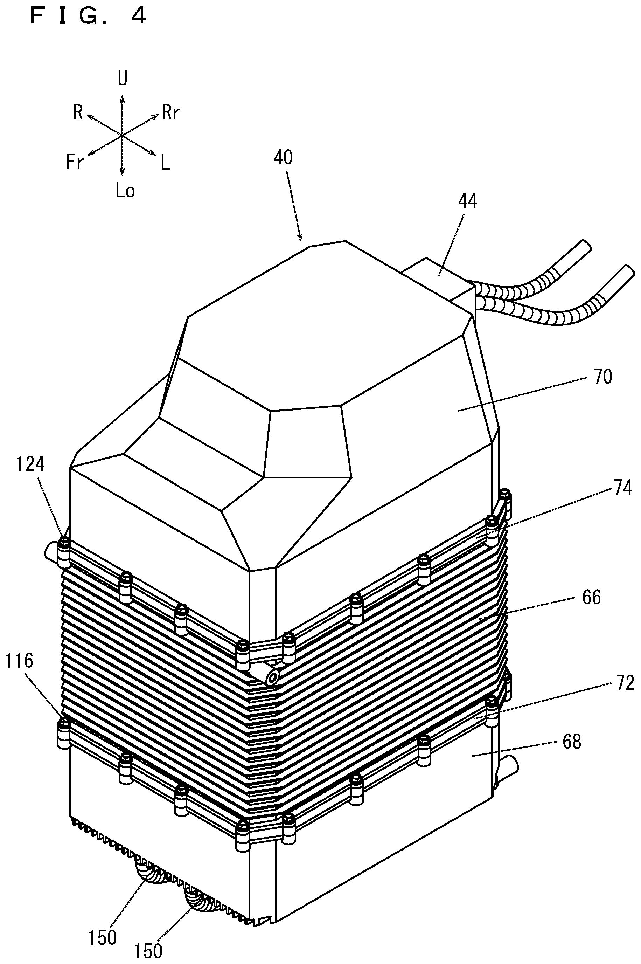

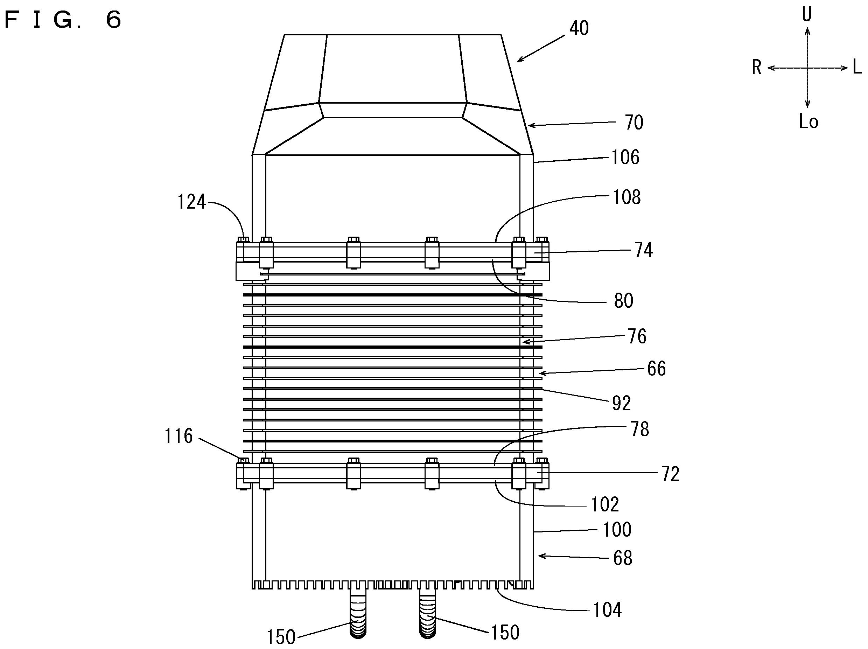

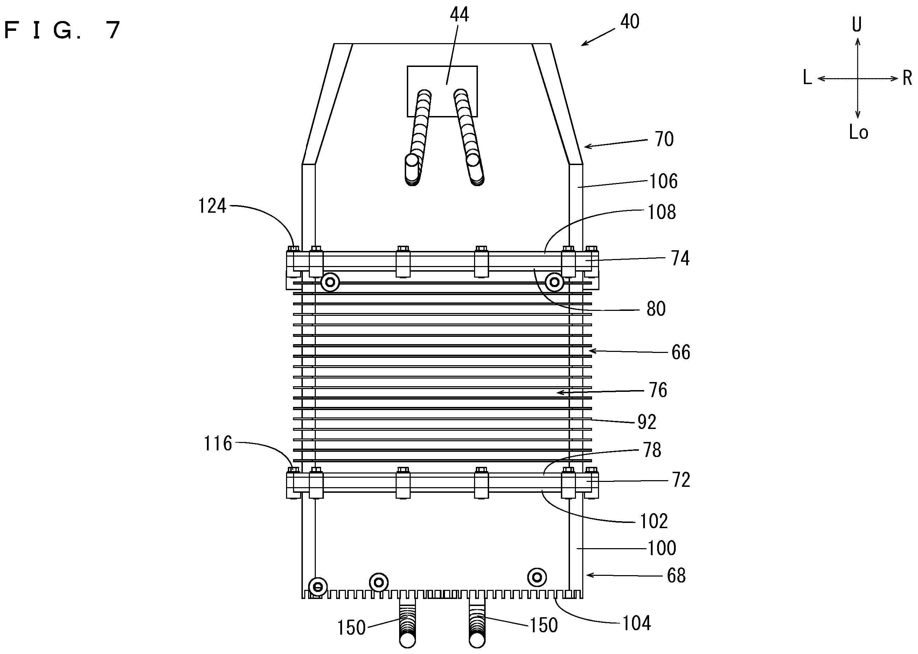

Referring to Fig. 4 through Fig. 7, the battery pack 40 is formed in a generally egg-like shape, and includes a first case 66, a second case 68, a third case 70, a first plate member 72, and a second plate member 74.

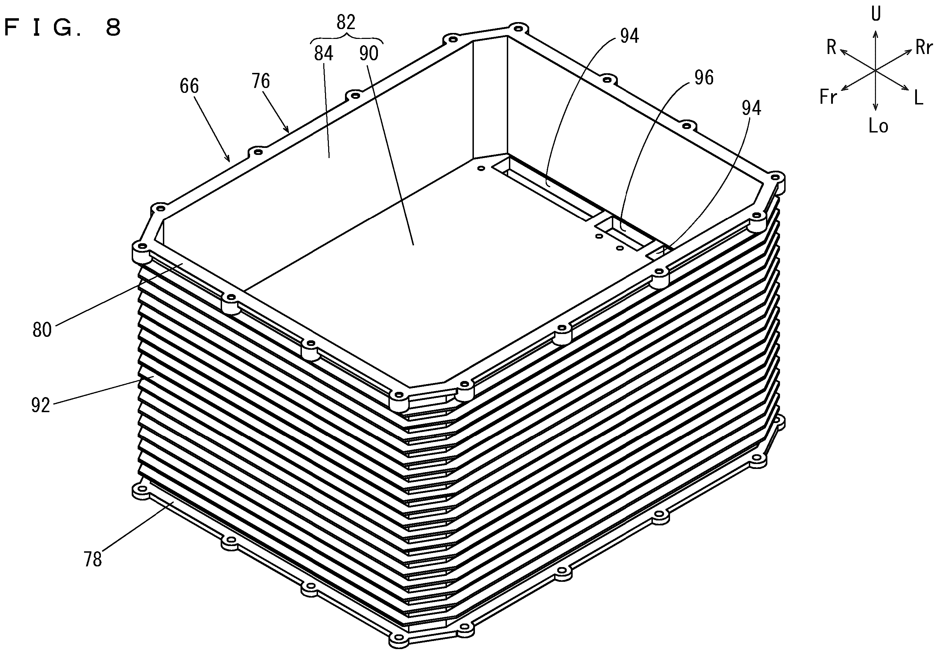

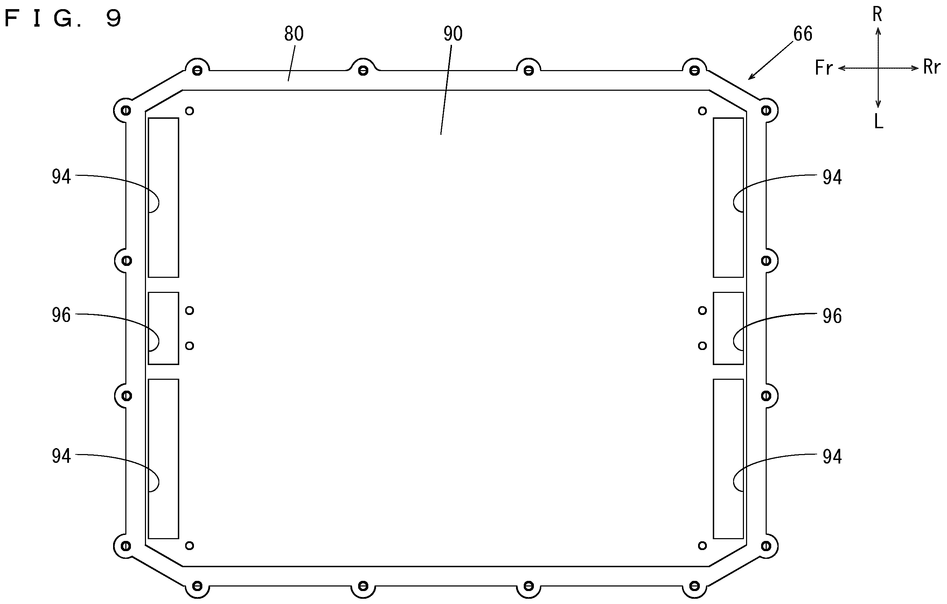

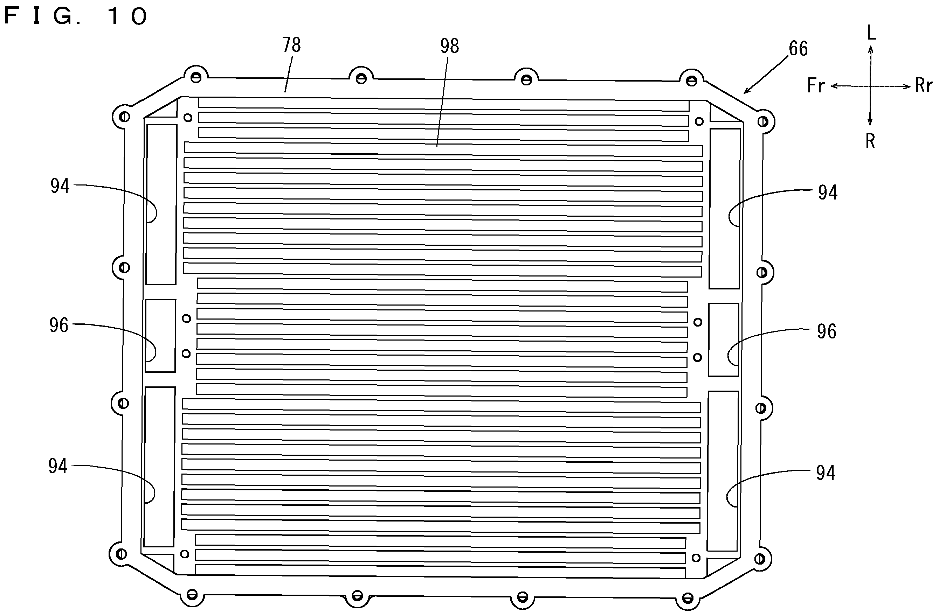

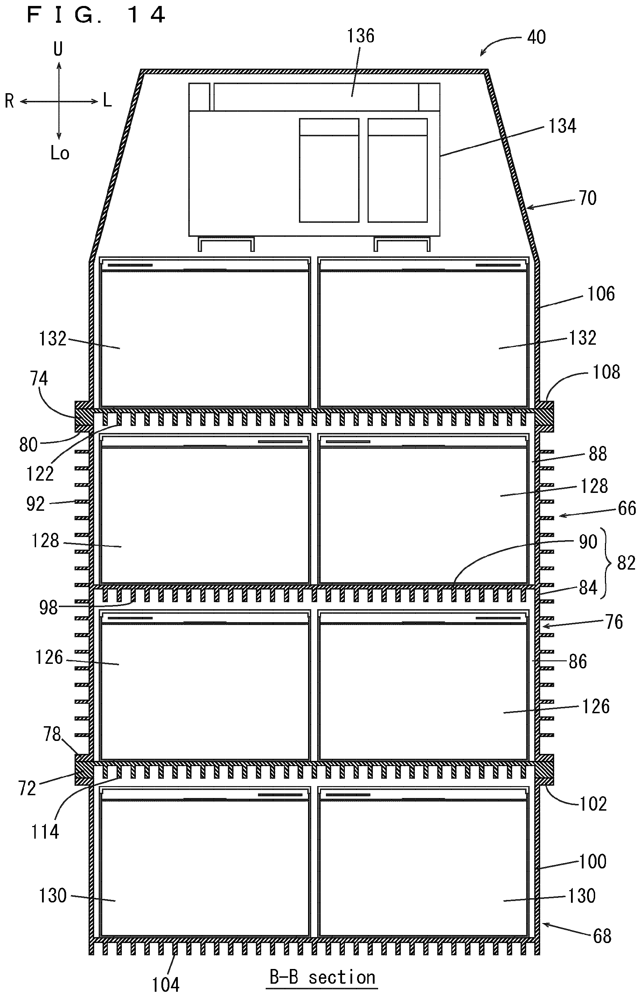

Referring also to Fig. 8 through Fig. 10, the first case 66 is formed in a generally rectangular shape, and includes a first case main body 76, a first flange portion 78 formed at an outer circumference of a first end of the first case main body 76, and a second flange portion 80 formed at an outer circumference of a second end, i.e., an axially opposite end facing away from the first end, of the first case main body 76. The first case main body 76 has a wall portion 82 with an H-shaped section (see Fig. 14). The wall portion 82 is constituted by a cylindrical portion 84 having two open ends, and a partitioning portion 90 dividing an inside of the cylindrical portion 84 axially into a first storage portion 86 and a second storage portion 88. The partitioning portion 90 is formed at an axially intermediate region of the cylindrical portion 84, in parallel with the first flange portion 78 and the second flange portion 80. In other words, the wall portion 82 is formed so that it has an H-shaped longitudinal section, not only in a front-rear direction and in a left-right direction but also in any other directions. Therefore, it is possible to make the first case main body 76 having a high stiffness in all directions. First fins 92 are provided on an outer circumferential surface of the first case main body 76.

The partitioning portion 90 includes a plurality (four in the present embodiment) of first through-holes 94 usable as passages for first bus bars 138 (which will be described later), and a plurality (two in the present embodiment) of fourth through-holes 96 usable as passages for electric wires 150 (which will be described later). The partitioning portion 90 has a first end region (front end region in the present embodiment) provided with two first through-holes 94 and one fourth through-hole 96 between the two first through-holes 94. The partitioning portion 90 has a second end region (rear end region in the present embodiment) provided with two first through-holes 94 and one fourth through-hole 96 between the two first through-holes 94. The partitioning portion 90 has a main surface (back surface in the present embodiment) provided with second fins 98.

Referring to Fig. 4 through Fig. 7 and Fig. 14, the second case 68 is formed in a generally rectangular parallelepiped shape, and includes a second case main body 100 having a bottom and an open end, and a third flange portion 102 formed on an outer circumference of an end of the second case main body 100. The second case main body 100 has a main surface (back surface in the present embodiment) provided with fifth fins 104. The third case 70 is formed in a generally frustum shape, and includes a third case main body 106 having an open end, and a fourth flange portion 108 formed on an outer circumference of an end of the third case main body 106.

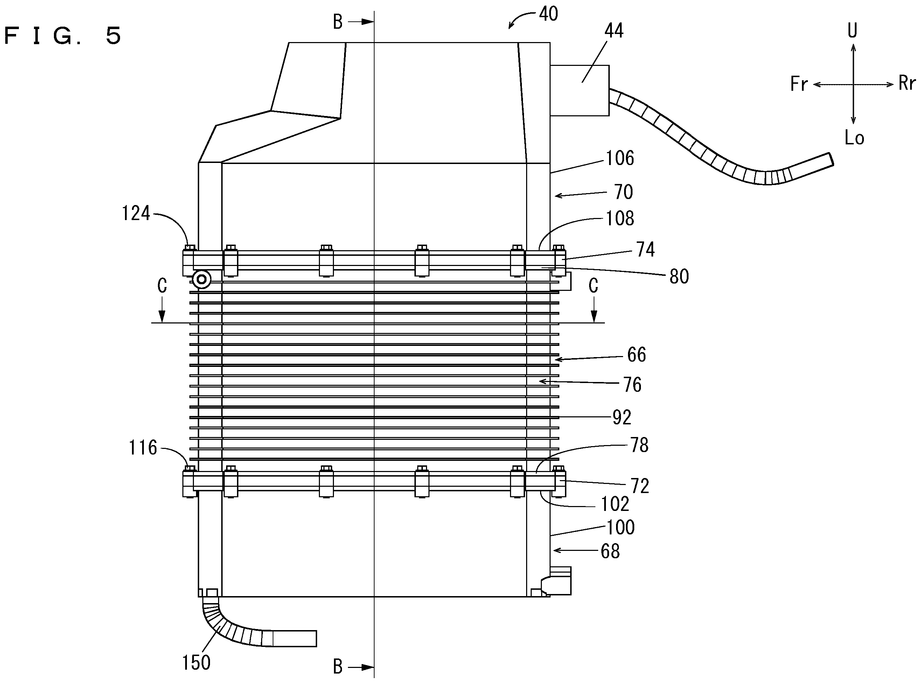

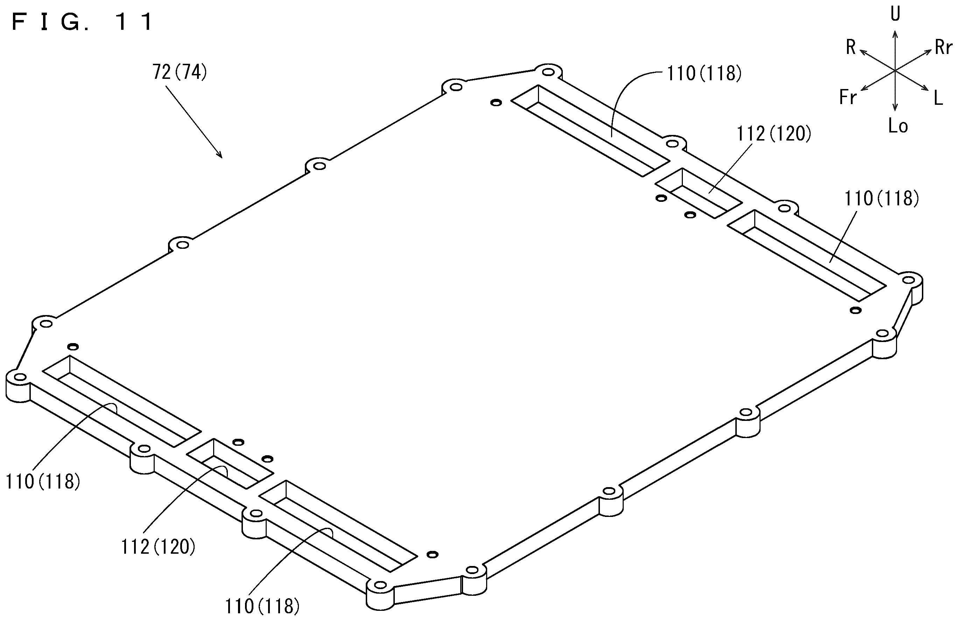

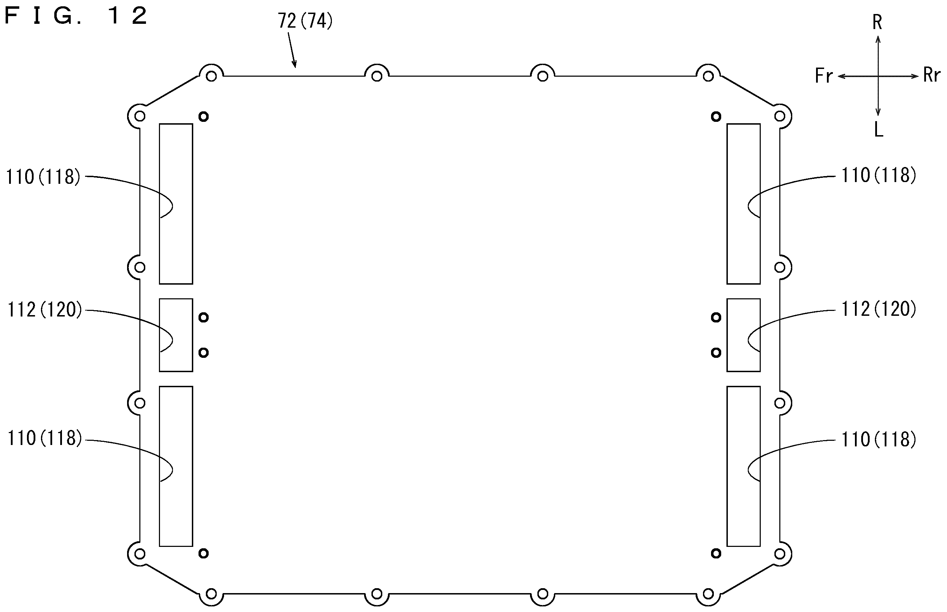

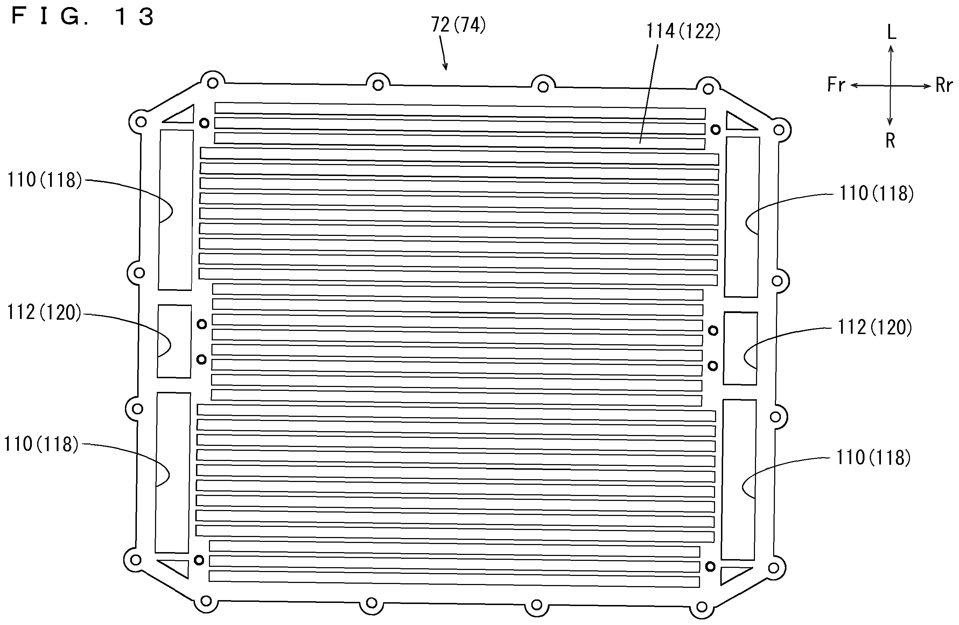

Referring to Fig. 11 through Fig. 13, the first plate member 72 is formed generally in a rectangular plate, and includes a plurality (four in the present embodiment) of second through-holes 110 usable as passages for second bus bars 140 (which will be described later), and a plurality (two in the present embodiment) of fifth through-holes 112 usable as passages for the electric wires 150. The first plate member 72 has a first end region (front end region in the present embodiment) provided with two second through-holes 110 and one fifth through-hole 112 between the two second through-holes 110. The first plate member 72 has a second end region (rear end region in the present embodiment) provided with two second through-holes 110 and one fifth through-hole 112 between the two second through-holes 110. The first plate member 72 has a main surface (back surface in the present embodiment) provided with third fins 114. The first flange portion 78 and the third flange portion 102 are fastened integrally to each other by a plurality of fasteners 116, sandwiching the first plate member 72 in between (see Fig. 5). Thus, the first plate member 72 is fixed to the first flange portion 78, closing the first storage portion 86.

Likewise, the second plate member 74 is formed generally in a rectangular plate, and includes a plurality (four in the present embodiment) of third through-holes 118 usable as passages for third bus bars 142 (which will be described later), and a plurality (two in the present embodiment) of sixth through-holes 120 usable as passages for the electric wires 150. The second plate member 74 has a first end region (front end region in the present embodiment) provided with two third through-holes 118 and one sixth through-hole 120 between the two third through-holes 118. The second plate member 74 has a second end region (rear end region in the present embodiment) provided with two third through-holes 118 and one sixth through-hole 120 between the two third through-holes 118. The second plate member 74 has a main surface (back surface in the present embodiment) provided with fourth fins 122. The second flange portion 80 and the fourth flange portion 108 are fastened integrally to each other by a plurality of fasteners 124, sandwiching the second plate member 74 in between (see Fig. 5). Thus, the second plate member 74 is fixed to the second flange portion 80, closing the second storage portion 88.

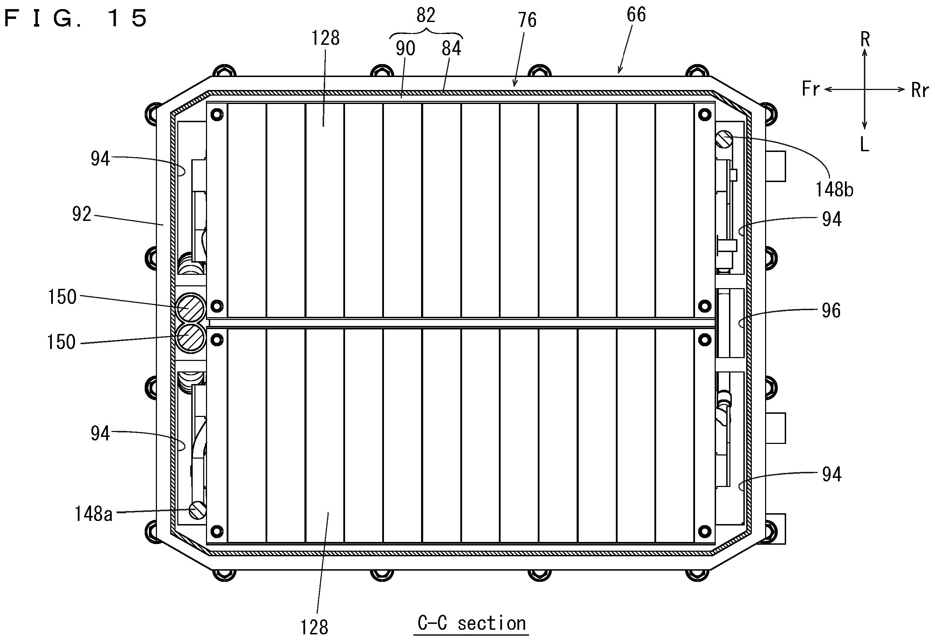

Referring to Fig. 14 and Fig. 15, two first assembled batteries 126 are housed in the first storage portion 86 of the first case main body 76. Two second assembled batteries 128 are housed in the second storage portion 88 of the first case main body 76. Two third assembled batteries 130 are housed in the second case main body 100. Two fourth assembled batteries 132 are housed in the third case main body 106. In this way, the first assembled batteries 126 through the fourth assembled batteries 132 are stacked in tears. Each of the first assembled batteries 126 is disposed on the first plate member 72 which has the third fins 114 on its back surface. Each of the second assembled batteries 128 is disposed on the partitioning portion 90 which has the second fins 98 on its back surface. Each of the third assembled batteries 130 is disposed on the second case main body 100 which has the fifth fins 104 on its back surface. Each of the fourth assembled batteries 132 is disposed on the second plate member 74 which has the fourth fins 122 on its back surface. These facilitate transfer of heat from the first assembled batteries 126 through the fourth assembled batteries 132, making it easy to dissipate the heat. Each of the first assembled batteries 126 through the fourth assembled batteries 132 includes a plurality of battery cells provided by lithium-ion battery cells for example, and is formed in a shape of a rectangular parallelepiped.

The third case main body 106 further houses a junction box 134 and a BMC (battery management controller) 136, i.e., electric components. The junction box 134 is provided above the two fourth assembled batteries 132. The BMC 136 is disposed on the junction box 134. In this way, the electric components are provided at a position higher than the first case 66. Also, as described above, the inverter 48, i.e., an electric component, is provided below the battery pack 40, namely at a position lower than the first case 66 (see Fig. 3).

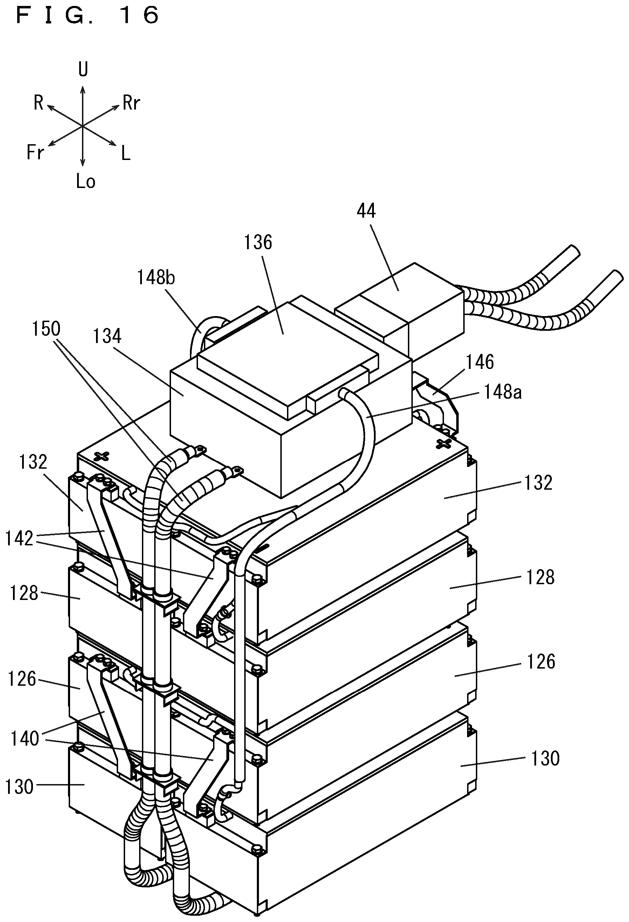

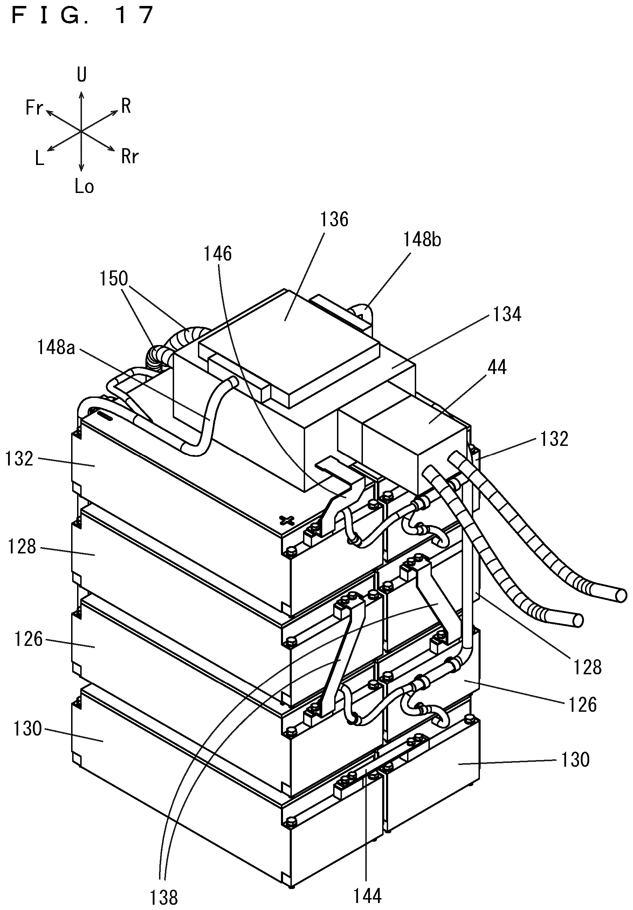

Referring to Fig. 16 and Fig. 17, each first assembled battery 126 is connected with the second assembled battery 128 which is adjacent in the up-down direction, via the first bus bar 138 routed through the first through-hole 94. Each first assembled battery 126 is connected with the third assembled battery 130 which is adjacent in the up-down direction, via the second bus bar 140 routed through the second through-hole 110. Each second assembled battery 128 is connected with the fourth assembled battery 132 which is adjacent in the up-down direction, via the third bus bar 142 routed through the third through-hole 118. The third assembled batteries 130 which sit adjacent to each other are connected with each other via the fourth bus bar 144. Each fourth assembled battery 132 is connected with the junction box 134 via the fifth bus bar 146. In this way, a total of eight first assembled batteries 126 through fourth assembled batteries 132 are connected in series. Also, the BMC 136 is connected with a plurality of electric wires 148a, 148b in order to detect status of each of the first assembled batteries 126 through the fourth assembled batteries 132 such as amperage values and voltage values. The electric wire 148a is routed through the front-left third through-hole 118, the first through-hole 94 and the second through-hole 110, and then connected with the first assembled battery 126 through the fourth assembled battery 132 on the left side. The electric wire 148b is routed through the rear-right third through-hole 118, the first through-hole 94 and the second through-hole 110, and then connected with the first assembled battery 126 through the fourth assembled battery 132 on the right side.

The junction box 134 is connected with the electric charger 42 via the connector 44. By connecting the electric charger 42 with a commercial power source for example, it is possible to charge the first assembled batteries 126 through the fourth assembled batteries 132 of the battery pack 40. Also, the junction box 134 is connected with the inverter 48 via two electric wires (high-voltage electric wires in the present embodiment) 150. The inverter 48 is connected with the electric motor 46. Therefore, DC power from the battery pack 40 is converted into AC power by the inverter 48, then supplied to the electric motor 46 to drive the electric motor 46.

According to the battery pack 40 of the electric two-wheeled vehicle 10 described thus far, it is possible to increase stiffness of the first case 66 while reducing increase in the number of parts since the first case main body 76 has the integrally formed wall portion 82 having an H-shaped section. Also, it is possible to easily fix the first plate member 72 to the first flange portion 78 which is formed on the outer circumference of the first end of the first case main body 76, and it is possible to ensure water tightness of the first storage portion 86 by closing the first storage portion 86. Likewise, it is possible to easily fix the second plate member 74 to the second flange portion 80 which is formed on the outer circumference of the second end of the first case main body 76, and it is possible to ensure water tightness of the second storage portion 88 by closing the second storage portion 88.

By providing the first fins 92 on the outer circumferential surface of the first case main body 76, it becomes possible to increase a heat dissipation area and improve cooling performance. Also, it becomes possible to obtain the first case 66 which is light-weighted and high in stiffness.

By providing the second fins 98 on the main surface of the partitioning portion 90, it becomes possible to increase a heat dissipation area and improve cooling performance. Also, it becomes possible to obtain the first case 66 which is light-weighted and high in stiffness.

By providing the third fins 114 on the main surface of the first plate member 72, it becomes possible to increase a heat dissipation area and improve cooling performance. Also, it becomes possible to obtain the first plate member 72 which is light-weighted and high in stiffness.

By providing the fourth fins 122 on the main surface of the second plate member 74, it becomes possible to increase a heat dissipation area and improve cooling performance. Also, it becomes possible to obtain the second plate member 74 which is light-weighted and high in stiffness.

With the first bus bar 138 which is routed through the first through-hole 94 of the partitioning portion 90, it is possible to easily connect the first assembled battery 126 housed in the first storage portion 86 with the second assembled battery 128 housed in the second storage portion 88.

By fastening the first flange portion 78 and the third flange portion 102 integrally to each other with the first plate member 72 sandwiched in between, it becomes possible to connect the first case 66 and the second case 68 with each other by means of flange jointing, making it possible to easily ensure water tightness of the first storage portion 86 of the first case 66 and the second case 68. By housing the assembled batteries not only inside the first case 66 but also inside the second case 68, it becomes possible to house a large number of batteries inside the battery pack 40. Housing the electric components inside the second case 68 makes it possible to compactify a construction around the battery pack 40. In a case like the electric two-wheeled vehicle 10 where the battery pack 40 is placed vertically, with the first case 66 located at a higher position and the second case 68 located at a lower position, the outward-bulging first flange portion 78 and third flange portion 102 are located at a higher position than the bottom portion of the battery pack 40. In other words, it is possible to dispose the first flange portion 78 and the third flange portion 102 as closely to the center as possible in the up-down direction. Therefore, it becomes easy to ensure a bank angle of the electric two-wheeled vehicle 10. It also becomes possible to allow for knee gripping without sacrificing riding postures.

With the second bus bar 140 which is routed through the second through-hole 110 of the first plate member 72, it is possible to easily connect the first assembled battery 126 housed in the first storage portion 86 of the first case 66 with the third assembled battery 130 housed in the second case 68.

By providing the fifth fins 104 on the main surface of the second case main body 100, it becomes possible to increase a heat dissipation area and improve cooling performance. Also, it becomes possible to obtain the second case 68 which is light-weighted and high in stiffness.

By fastening the second flange portion 80 and the fourth flange portion 108 integrally to each other with the second plate member 74 sandwiched in between, it becomes possible to connect the first case 66 and the third case 70 with each other by means of flange jointing, making it possible to easily ensure water tightness of the second storage portion 88 of the first case 66 and the third case 70. By housing the assembled batteries not only inside the first case 66 but also inside the third case 70, it becomes possible to house a large number of batteries inside the battery pack 40. Housing the electric components inside the third case 70 makes it possible to compactify a construction around the battery pack 40. In a case like the electric two-wheeled vehicle 10 where the battery pack 40 is placed vertically, with the third case 70 located at a higher position and the first case 66 located at a lower position, the outward-bulging second flange portion 80 and fourth flange portion 108 are located at a lower position than the top portion of the battery pack 40. In other words, it is possible to dispose the second flange portion 80 and the fourth flange portion 108 as closely to the center as possible in the up-down direction. Therefore, it is possible to house the battery pack 40 easily inside the body frame 12, and therefore also inside a cowling, of the electric two-wheeled vehicle 10. Further, in a case like the electric two-wheeled vehicle 10 where the battery pack 40, in which the first case 66 is sandwiched by the second case 68 and the third case 70, is vertically placed, with the third case 70, the first case 66 and the second case 68 positioned in this order from top toward bottom, the first flange portion 78 and the third flange portion 102 are located at a higher position than the bottom portion of the battery pack 40, and the second flange portion 80 and the fourth flange portion 108 are located at a lower position than the top portion of the battery pack 40. In this case, it is possible to concentrate the flange portions to an intermediate region in the vertical direction of the battery pack 40, so that the battery pack 40 has a generally egg-shaped section, making it possible to form into a shape easy to layout in a two-wheeled vehicle which is voluminous in its center.

With the third bus bar 142 which is routed through the third through-hole 118 of the second plate member 74, it is possible to easily connect the second assembled battery 128 housed in the second storage portion 88 of the first case 66, with the fourth assembled battery 132 housed in the third case 70.

By providing the junction box 134 and the BMC 136 at a place higher than the first case 66 and providing the inverter 48 at a place lower than the first case 66, it becomes possible to dispose the electric components inside or near the battery pack 40, and to make the electric wires 148a, 148b, 150 inside or around the battery pack 40 short.

The electric wire 150 which is connected with the junction box 134 is routed through the sixth through-hole 120 of the second plate member 74, the fourth through-hole 96 of the partitioning portion 90, and the fifth through-hole 112 of the first plate member 72. This makes it easy to lay the wire.

The battery pack 40 is suitably applicable to the electric two-wheeled vehicle 10. In particular, since it is possible to increase stiffness of the first case 66 of the battery pack 40, it is possible to make the first case 66 itself as part of the body frame of the electric two-wheeled vehicle 10.

In the embodiment described above, the junction box 134 and the BMC 136 are provided at a higher position than the first case 66, and the inverter 48 is provided at a lower position than the first case 66; the electric components are provided at higher and lower positions than the first case 66. However, the present invention is not limited to this. The electric components should be provided at least at one of the higher and lower positions than the first case 66.

In the embodiment described above, the battery pack 40 is placed vertically. However, the invention is not limited to this; the battery pack may be placed horizontally.

The first case main body of the battery pack according to the present invention requires that it has at least a wall portion with an H-shaped section, and may have other structural members (such as an additional partitioning portion) and the like.

The first plate member and/or the second plate member may be provided with cooling passages inside them. This makes it possible to improve cooling performance of the battery pack.

In the embodiment described above, description was made for a case where the present invention is applied to the electric two-wheeled vehicle 10. However, the invention is not limited to this. The present invention is applicable to any electric vehicles including electric ATVs, four-wheeled electric vehicles, etc.

The present invention being thus far described in terms of preferred embodiments, it is obvious that these may be varied in many ways within the scope and the spirit of the present invention. The scope of the present invention is only limited by the accompanied claims.

### REFERENCE SIGNS LIST

- 10: Electric two-wheeled vehicle
- 12: Body frame
- 40: Battery pack
- 42: Electric charger
- 46: Electric motor
- 66: First case
- 68: Second case
- 70: Third case
- 72: First plate member
- 74: Second plate member
- 76: First case main body
- 78: First flange portion
- 80: Second flange portion
- 82: Wall portion
- 84: Cylindrical portion
- 86: First storage portion
- 88: Second storage portion
- 90: Partitioning portion
- 92: First fin
- 94: First through-hole
- 96: Fourth through-hole
- 98: Second fin
- 100: Second case main body
- 102: Third flange portion
- 104: Fifth fin
- 106: Third case main body
- 108: Fourth flange portion
- 110: Second through-hole
- 112: Fifth through-hole
- 114: Third fin
- 118: Third through-hole
- 120: Sixth through-hole
- 122: Fourth fin
- 126: First assembled battery
- 128: Second assembled battery
- 130: Third assembled battery
- 132: Fourth assembled battery
- 134: Junction box
- 136: BMC
- 138: First bus bar
- 140: Second bus bar
- 142: Third bus bar
- 144: Fourth bus bar
- 146: Fifth bus bar
- 148a, 148b, 150: Electric wire

## Claims

1. A battery pack comprising: a first case including a first case main body having a wall portion having an **H-**shaped section constituted by a cylindrical portion having two open ends and a partitioning portion dividing an inside of the cylindrical portion in an axial direction into a first storage portion and a second storage portion, a first flange portion formed at an outer circumference of a first end of the first case main body, and a second flange portion formed at an outer circumference of a second end, which is an axially opposite end facing away from the first end, of the first case main body;
a first plate member fixed to the first flange portion to close the first storage portion;
a second plate member fixed to the second flange portion to close the second storage portion;
a first assembled battery housed in the first storage portion; and
a second assembled battery housed in the second storage portion.

2. The battery pack according to Claim 1, further comprising a first fin provided on an outer circumferential surface of the first case main body.

3. The battery pack according to Claim 1 or 2, further comprising a second fin provided on a main surface of the partitioning portion.

4. The battery pack according to one of Claims 1 through 3, further comprising a third fin provided on a main surface of the first plate member.

5. The battery pack according to one of Claims 1 through 4, further comprising a fourth fin provided on a main surface of the second plate member.

6. The battery pack according to one of Claims 1 through 5, further comprising a first bus bar connecting the first assembled battery and the second assembled battery with each other, wherein
the partitioning portion includes a first through-hole as a passage for the first bus bar.

7. The battery pack according to one of Claims 1 through 6, further comprising a second case including a second case main body having an open end, and a third flange portion formed on an outer circumference of the end of the second case main body, wherein
the first flange portion and the third flange portion are fastened integrally to each other, with the first plate member sandwiched in between.

8. The battery pack according to Claim 7, further comprising a third assembled battery housed in the second case main body; and
a second bus bar connecting the first assembled battery and the third assembled battery with each other, wherein
the first plate member includes a second through-hole as a passage for the second bus bar.

9. The battery pack according to Claim 7 or 8, further comprising a fifth fin provided on a main surface of the second case main body.

10. The battery pack according to one of Claims 1 through 9, further comprising a third case including a third case main body having an open end, and a fourth flange portion formed on an outer circumference of the end of the third case main body, wherein
the second flange portion and the fourth flange portion are fastened integrally to each other, with the second plate member sandwiched in between.

11. The battery pack according to Claim 10, further comprising a fourth assembled battery housed in the third case main body; and
a third bus bar connecting the second assembled battery and the fourth assembled battery with each other, wherein
the second plate member includes a third through-hole as a passage for the third bus bar.

12. The battery pack according to one of Claims 1 through 11, further comprising an electric component provided at least at one of a higher and a lower positions than the first case.

13. The battery pack according to Claim 12, further comprising an electric wire connected with the electric component, wherein
the partitioning portion includes a fourth through-hole as a passage for the electric wire.

14. The battery pack according to Claim 12, further comprising an electric wire connected with the electric component, wherein
the first plate member includes a fifth through-hole as a passage for the electric wire.

15. The battery pack according to Claim 12, further comprising an electric wire connected with the electric component, wherein
the second plate member includes a sixth through-hole as a passage for the electric wire.

16. An electric vehicle comprising: the battery pack according to one of Claims 1 through 15; and
a body frame supporting the battery pack.
